# EUROPEAN PATENT APPLICATION

(11) **EP 1 164 808 A1**
(43) Date of publication of application: **19.12.2001**
(21) Application number: 00127933.0
(22) Date of filing: 20.12.2000
(51) Int. Cl.: H04Q 7/38, H04Q 7/32

(54) **Automatic working mode switching system for mobile stations**

(30) Priority: 16.06.2000 JP 2000182102; 10.07.2000 JP 2000208054
(71) Applicant: Yugen Kaisha OFA Design Office, Fukui-shi, 910-0854 (JP)
(72) Inventor: Terasaka, Takao, Nyu-gun, Fukui-ken 916-0147 (JP)
(74) Representative: VOSSIUS & PARTNER

(57) **Abstract**

An automatic mode switching system for mobile stations, using weak radio waves (5,8) in changing the ringing call-arrival informing mode to the silent call-arrival informing mode, or in putting the mobile station in a selected condition of "transmission-and-reception ceased", "transmission ceased", "phone-conversation inhibited", "electric power off" or such like in the phone-conversation inhibited place. It includes first (7) and second (4) control signal generators positioned on the inside and outside of the entrance (3) of the closed space (1). Each control signal generator has at least inputting means for inputting control conditions according to which the mobile station is permitted to work, memory means for storing the contents of control condition; and transmitting means for transmitting the control signals representing the control condition. When getting in the closed space the mobile station (6) receives via its antenna the radio wave (5) carrying the control signals from the first control signal generator (4) to make the mobile station to switch its working mode from the ringing to silent mode, thereby informing the call arrival by means of medium other than sound. When getting out of the closed space (1) the mobile station receives via its antenna the radio wave carrying the control signals from the second control signal generator to make the mobile station to switch its working mode from the silent to ringing mode, thereby informing the call arrival by means of sound.

## Description

The present invention relates to an automatic switching system responsive to entrance and exit from a certain conversation-inhibited place for switching the working mode of a mobile station such as a cellular phone, a beeper, a PHS, a satellite communication phone, or a mobile communication terminal, thus putting the mobile station in transmission inhibiting condition, transmission-and-reception inhibiting condition, phone-conversation inhibiting condition or electric power source turning-off condition in the certain conversation-inhibited place, and particularly switching the mobile station from the ringing call-arrival informing mode to the silent call-arrival informing mode when getting in the certain conversation-inhibited place, and from the silent call-arrival informing mode to the ringing call-arrival informing mode when getting out of such closed space.

Nowadays not only working people but also students and housewives carry mobile stations, so that they may telephone everywhere. Their telephone conversations may bother surrounding people in a certain place, such as a music hall. Even the ringing for informing the carrier of the arrival of calls may bother surrounding people. In place of such bothering sound intermittent radiation of light or vibration may be used.

In the music hall or the conference room or in train, it is required that the call-arrival informing mode be switched from the ringing to the vibrating function. Beyond the bothering problem, the use of mobile stations causes a danger in some places as for instance follows: when airplanes are landing off or on, use of mobile stations is not allowed lest any malfunction of air-borne electronic devices should be adversely effected by the radio wave from such mobile stations; or use of mobile stations is not allowed in hospitals for similar reasons.

People carrying their cellular phones are liable to fail to switch their cellular phones to silent call-arrival informing mode inadvertently, and as an unfortunate result the ringing often bothers surrounding people in the music hall or the conference room or in train. It is not rare that few mobile stations remain often in the ringing call-arrival informing condition even when an airplane is landing off or on. This sort of problem cannot be completely solved so far as the safety relies on individual concerns.

Japanese Patent 11-18154(A) discloses a working mode switching method according to which in a certain conversation-inhibited space a mobile station is responsive to control signals from a signal generator installed in the certain space for switching the ringing call-arrival informing mode to the vibrating call-arrival informing mode in the certain space. This, however, requires that the control signals can be received everywhere in such a limited space. If the ringing-inhibited area is so extensive or if it has curved corridors, the radio wave carrying such control signal need be increased in strength, and a number of signal generators need be placed in different places.

It may be possible that the radio wave carrying such control signal leaks from the ringing-inhibited area, thus causing an inhibiting effect on mobile stations outside of the ringing-inhibited area. Such leakage of radio wave cannot be prevented unless the radio wave shield is applied to or embedded in the surrounding wall. Such equipment, however, is inhibitably expensive.

Assuming that the ringing-inhibited area is a hospital, and that the conventional working mode switching method is used in the hospital, the radio wave carrying such control signal need be increased in strength enough to spread over the whole area in the hospital to cause adverse effect on pacemakers or other electronic devices used for instance, in surgical operations or diagnoses.

One object of the present invention is to provide an automatic working mode switching system for mobile stations which is free from such defects as described above, using a radio wave of reduced strength at a given entrance to permit the mobile station to change its call-arrival informing function between the ringing and silent modes, or permit the mobile station to be dormant by putting it particularly in transmission inhibiting condition, transmission-and-reception inhibiting condition, phone-communication inhibiting condition or electric power supply turning-off condition to meet occasional demands.

An automatic working mode switching system for switching the working of a mobile station between the outside-permitted and inside-permitted modes at the outside-and-inside boundary of a certain closed space, for example switching from the ringing call-arrival informing mode to the silent call-arrival informing mode when getting in the closed space, and from the silent call-arrival informing mode to the ringing call-arrival informing mode when getting out of the closed space, is improved according to the present invention in that it comprises first and second control signal generators positioned on the inside and outside of the entrance of the closed space respectively, each control signal generator comprising at least inputting means for inputting control conditions according to which the mobile station is permitted to work; memory means for storing the contents of the control conditions thus inputted; and transmitting means for transmitting the control signals representing the control conditions, whereby when getting in the closed space the mobile station receives via its antenna the radio wave carrying the control signals from the first control signal generator to make the mobile station to switch its working mode from the outside-permitted mode to the inside-permitted mode, thereby informing the call arrival by means of medium other than sound, and when getting out of the closed space the mobile station receives via its antenna the radio wave carrying the control signals from the second control signal generator to make the mobile station to switch its working mode from the inside-permitted mode to the outside-permitted mode.

The control signal from the first control signal generator may include a signal component representing a predetermined length of time set for permitting the mobile station to return to the previous working mode, and the mobile station includes a timer responsive to the signal component for returning to the previous working mode after expiration of the predetermined length of time.

When getting in the closed space, the mobile station may be responsive to the control signal from the first control signal generator for putting the mobile station in transmission inhibiting condition, transmission-and-reception inhibiting condition, phone-conversation inhibiting condition or electric power source turning-off condition.

The mobile station may be a cellular phone, a beeper, a PHS, a satellite communication phone, or a mobile communication terminal unit.

The mobile station may include a display and a voice making unit, the display being responsive to the switching of the call-arrival informing mode for indicating change of the call-arrival informing mode, and the voice making unit being responsive to the switching of the call-arrival informing mode for announcing change of the call-arrival informing mode.

Each of the first and second control signal generators may comprise a voice making unit for uttering when sending control signals for changing call-arrival informing modes and communication conditions.

A sensor may be provided at the entrance, and each of the first and second control signal generators is responsive to the detection signal from the sensor for transmitting the control signal.

Other objects and advantages of the present invention will be understood from the following description of an automatic working mode switching system according to one preferred embodiment of the present invention, which is shown in accompanying drawings.
Fig.1 illustrates an automatic working mode switching system for mobile stations according to the present invention;
Fig.2 is a block diagram showing the structure of a mobile station modified according to the present invention; and
Fig.3 is a block diagram showing the structure of a control signal generator.

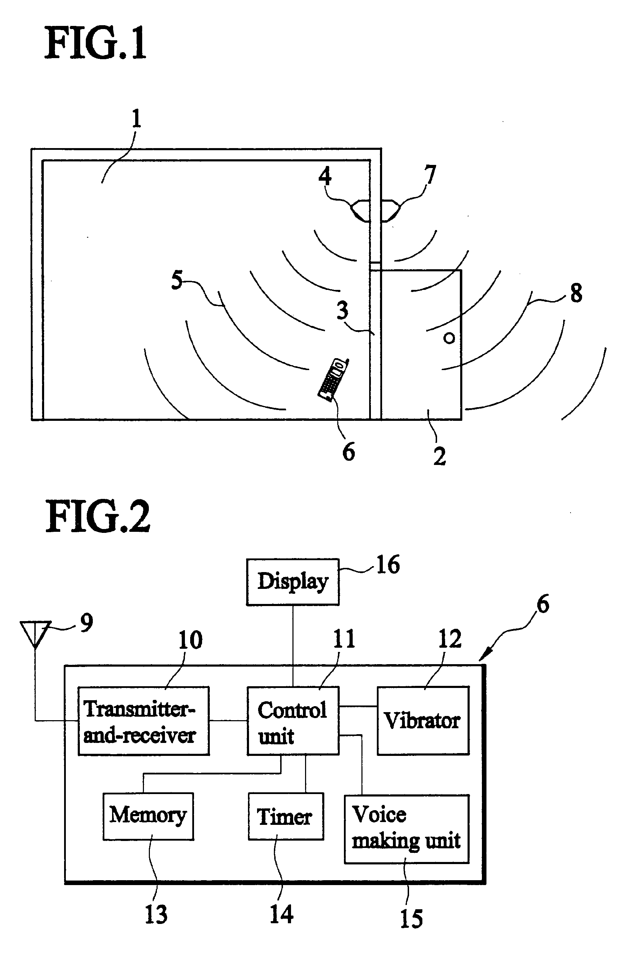

Referring to Fig.1, the principle of the invention according to which a mobile station 6 can be switched in working mode as requested is described below. An enclosed space 1 is a phone-conversation inhibited place, such as a conference room, a lecture hall, a music hall, a movie theater or the inside of a train, a bus, an airplane or a hospital. In these areas the ringing of the mobile station is inhibited, too. The automatic working mode switching system functions to switch the mobile station 6 from the ringing call-arrival informing mode to the silent call-arrival informing mode when getting in the closed space, and from the silent call-arrival informing mode to the ringing call-arrival informing mode when getting out of the closed space. As seen from the drawing, first and second control signal generators 4 and 7 are positioned above the door 2 of the entrance 3 of the closed space 1 on the inside and outside of the entrance 3 respectively.

Referring to Fig.2, the mobile station 6 comprises at least a transmitter-and-receiver 10 connected to its antenna 9, a control unit 11 for receiving control signals from the transmitter-and-receiver 10, a vibrator 12, a memory 13, a timer 14, a voice making unit 15 and a display 16. The vibrator 12, the memory 13, the timer 14, the voice making unit 15 and the display 16 are connected to the control unit 11.

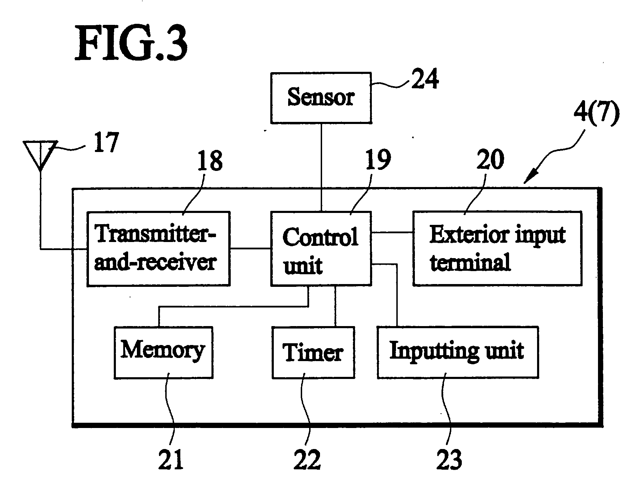

Referring to Fig.3, each control signal generator 4 or 7 comprises at least an antenna 17, a transmitter-and-receiver 18 connected to the antenna 17, a control unit 19 for sending control signals to the transmitter-and-receiver 18, an exterior input terminal 20, a memory 21, a timer 22, an inputting unit 23 and a sensor 24. The exterior input terminal 20, the memory 21, the timer 22, the inputting unit 23 and the sensor 24 are connected to the control unit 19. Each control signal generator 4 or 7 can be composed of two separate parts, one of which may comprise the inputting unit 23, the control unit 19, the transmitter-and-receiver 18 and others connected together by a length of cable, and only the antenna 17 can be separately placed onto the top of the entrance 3.

A caretaker can input data pertaining to some particulars of the closed space and the length of time for which the closed space is used with the aid of the inputting unit 23 and an associated computer connected to the exterior inputting unit 20, as for instance follows: the changing of the call-arrival informing mode from the ringing to the vibrating function, or the setting of the length of space-occupation time, the setting for transmission of control signals and other preset matters are repeatedly inputted. The pieces of information thus inputted are shifted from the control unit 19 to the memory 21 so that they may work together to permit the transmitter-and-receiver 18 to transmit the control signals via the antenna 17.

When a person carrying his mobile station opens the door 2 in the entrance 3 to get in the closed space 1, it is detected at the sensor 24 of the first control signal generator 4, which is placed at the top of the entrance 3. In response to arrival of the detection signal at the control unit 19 of the first control signal generator 4, the transmitter-and-receiver 18 transmits a radio wave 5 carrying control signals via the antenna 17. The radio wave 5 is received by the antenna 9 of the mobile station 6, allowing the control signal to arrive the control unit 11 via the transmitter-and-receiver 10. The memory 13 stores the ringing call-arrival informing mode prior to arrival of the control signals from the first control signal generator 4. The control unit 11 rewrites the ringing call-arrival informing mode to store the vibrating call-arrival informing mode so that the call-arrival informing mode may be changed automatically when passing through the entrance 3 to enter the closed space 1.

Conversely when passing through the entrance 3 to get out from the closed space 1, the radio wave 8 radiated from the second control signal generator 7 via the antenna 17 is received by the antenna 9 of the mobile station 6, allowing the control signal to reach the control unit 11 via the transmitter-and-receiver 10. The control unit 11 permits the memory 13 to be rewritten, thus changing the call-arrival informing mode to the one previous to receipt of the control signals from the first control signal generator 4.

When passing through the entrance 3, the person carrying his mobile station is informed of alteration of the call-arrival informing mode by means of utterance from the voice making unit 15 or otherwise, by means of the message given in the display 16. Apart from this, preferably there may be a notice up at the entrance 3, saying "Vibrating call-arrival information mode is being now available in your cellular phone."

It should be noted that the radio wave carrying the control signal is radiated in the limited space around the entrance 3, and that such radio wave be strong enough to affect the mobile station passing therethrough, not strong enough to cause an adverse effect on surrounding electronic devices, if any.

If a mobile station 6 has its memory 13 storing the vibrating call-arrival informing mode before getting in the closed space 1, nothing will be changed in the mobile station 6 when passing through the entrance 3. In contrast with this, if a mobile station 6 has its electric power source turning off before getting in the closed space 1, the memory 13 has no data changed, allowing the ringing call-arrival informing mode to be kept alive.

Assuming that a person carrying his mobile station 6 passes through the entrance 3, and that he turns the electric power source of the mobile station 6 off in the closed space 1 after the ringing call-arrival informing mode is changed to the silent call-arrival informing mode in the closed space 1, the person leaves the closed space 1 to reach a distant place where the radio wave 8 from the second control signal generator 7 cannot affect the mobile station 6. The control signal contains a signal component representing a predetermined length of time set for releasing the mobile telephone 6 from the silent call-arrival informing mode. Thanks to this, the mobile station 6 can return to the ringing call-arrival informing mode automatically after expiration of the predetermined length of time thus set for the purpose in the control signals. For example, assuming that in a movie theater the film is shown two hours, accordingly the audience being supposed to stay three hours in the theater, and that some mobile stations have their electric power supplies turning off, thus not being affected by the radio wave 8 at the entrance, the control unit 11 and the timer 14 work together, so that the memory 13 may be checked in terms of what type of call-arrival informing mode was available before getting in the movie theater so that the mobile station may return to the previous call-arrival informing mode. This is the case with alteration of other communication conditions.

The working mode switching system can meet the requirements for different call-arrival informing functions and for communication modes as required. Specifically the call-arrival informing functions can be selected in terms of which medium is used, the sound or silent medium whereas a required communication mode can be selected among "transmission-and-reception ceased", "transmission ceased", "phone-conversation inhibited", "electric power off" and such like. The communication mode of "transmission-and-reception ceased" permits the user to record new telephone numbers, access to selected telephone numbers for confirmation. If the mobile station is put in condition of "transmission ceased", receipt of signals in the form of letters from other mobile stations is permitted. If the mobile station is put in condition of "phone-conversation inhibited", receipt of signals in the form of letters from other mobile stations is permitted. Communication in the form of letters or electronic mail, therefore, is permitted. Finally if the electric power source is made to turn off, the mobile station is still permitted to receive the call.

As may be understood from the above, the automatic working mode switching system for mobile stations uses control signal generators placed at the entrance of a phone-inhibited, closed space for radiating radio wave carrying control signals, thereby providing following advantages:
1) installation of such control signal generators is simple and less expensive, still assuring the switching of mobile stations from the ringing call-arrival informing mode to the vibrating call-arrival informing mode or vice versa when getting in or out from the closed space; and
2) the radio wave prevails in a narrow space around the entrance, accordingly it is possible to limit the use of mobile stations surely even by a very weak radio wave, and therefore, no adverse effect can be caused on electronic devices in the hospital or other places in which radio wave-sensitive devices are used.

## Claims

1. An automatic working mode switching system for switching the working of a mobile station between the outside-permitted and inside-permitted modes at the outside-and-inside boundary of a certain closed space, for example switching from the ringing call-arrival informing mode to the silent call-arrival informing mode when getting in the closed space, and from the silent call-arrival informing mode to the ringing call-arrival informing mode when getting out of the closed space, **characterized in that** it comprises first and second control signal generators positioned on the inside and outside of the entrance of the closed space respectively, each control signal generator comprising at least inputting means for inputting control conditions according to which the mobile station is permitted to work; memory means for storing the contents of the control conditions thus inputted; and transmitting means for transmitting the control signals representing the control conditions, whereby when getting in the closed space, the mobile station receives via its antenna the radio wave carrying the control signals from the first control signal generator to make the mobile station to switch its working mode from the outside-permitted mode to the inside-permitted mode, thereby informing the call arrival by means of medium other than sound, and when getting out of the closed space, the mobile station receives via its antenna the radio wave carrying the control signals from the second control signal generator to make the mobile station to switch its working mode from the inside-permitted mode to the outside-permitted mode.

2. An automatic working mode switching system according to claim 1, wherein the control signal from the first control signal generator includes a signal component representing a predetermined length of time set for permitting the mobile station to return to the previous working mode, and the mobile station includes a timer responsive to the signal component for returning to the previous working mode after expiration of the predetermined length of time.

3. An automatic working mode switching system according to claim 1, wherein when getting in the closed space, the mobile station may be responsive to the control signal from the first control signal generator for putting the mobile station in transmission inhibiting condition, transmission-and-reception inhibiting condition, phone-conversation inhibiting condition or electric power source turning-off condition.

4. An automatic working mode switching system according to claim 1, 2 or 3, wherein the mobile station is a cellular phone, a beeper, a PHS, a satellite communication phone, or a mobile communication terminal unit.

5. An automatic working mode switching system according to claim 4, wherein the mobile station includes a display and a voice making unit, the display being responsive to the switching of the call-arrival informing mode for indicating a change of the call-arrival informing mode, and the voice making unit being responsive to the switching of the call-arrival informing mode for announcing a change of the call-arrival informing mode the mobile station.

6. An automatic working mode switching system according to claim 1, 2 or 3, wherein each of the first and second control signal generators comprises a voice making unit for uttering when sending control signals for altering call-arrival informing modes and communication conditions.

7. An automatic working mode switching system according to claim 1, 2 or 3, wherein a sensor is provided at the entrance, and each of the first and second control signal generators is responsive to the detection signal from the sensor for transmitting the control signal.

8. A method for switching the mode of a mobile station comprising one or several steps corresponding to any or several features of any of claims 1 to 7.
